# EUROPEAN PATENT APPLICATION

(11) **EP 2 618 437 A2**
(43) Date of publication of application: **24.07.2013**
(21) Application number: 13151209.7
(22) Date of filing: 14.01.2013
(51) Int. Cl.: H02G 3/32

(54) **Cable retainer**

(30) Priority: 19.01.2012 GB 201200915
(71) Applicant: Airbus Operations Limited, Bristol, Bristol BS99 7AR (GB)
(72) Inventor: Blakely, Lawrence, BRISTOL, BRISTOL BS99 7AR (GB); Ruiiz De Pablo, Javier, BRISTOL, BRISTOL BS99 7AR (GB); O'Shaugnessy, Paul, BRISTOL, BRISTOL BS99 7AR (GB); McIlveen, Mark, BRISTOL, BRISTOL BS99 7AR (GB)
(74) Representative: Scott, Alistair Francis

(57) **Abstract**

A device and method for securing a plurality of electrical conductors in a bundle. The device (10) comprises first and second portions (12a, 12b) connected so as to be moveable between a closed configuration in which the first and second portions define at least one enclosed space which extends through the device and an open configuration in which a conductor may be moved laterally into the at least one space from the periphery of the device. The device further includes a plurality of recesses (20) for receiving conductors disposed around its peripheral edge.

## Description

### Field of the Invention

The present Invention concerns a device for securing cables. More particularly, but not exclusively, this invention concerns a device for securing a plurality of electrical conductors in a bundle, and a method of securing together conductors in an aircraft. The invention also concerns a clamp for attaching a bundle of conductors held together by a cable retaining device to a surface.

### Background of the Invention

In an aircraft, cables made up of bundles of electrical conductors are used to distribute power from an electrical generator to various items of equipment which require electrical power to operate. Such cables usually carry three phases, with each phase being associated with two individual conductors connected in parallel. Thus, the cable is a bundle of six individual electrical conductors. An exciter cable which supplies field energy and control signals to the electrical generator is also often routed together with the power cable. The power cable plus exciter cable bundle is typically secured along its route inside the supporting structure of the cabin floor, the tail section of the aircraft, and also the wings.

The electrical conductors in the power cable are sensitive to electromagnetic radiation, and also themselves emit such electromagnetic radiation. The exciter cable also emits electromagnetic radiation. To prevent interference effects resulting from this electromagnetic radiation, the arrangement of the conductors and the exciter cable in the bundle must be controlled so as to maintain appropriate spacing between the various elements in the bundle, depending on the sensitivity of the individual conductors to the interfering radiation.

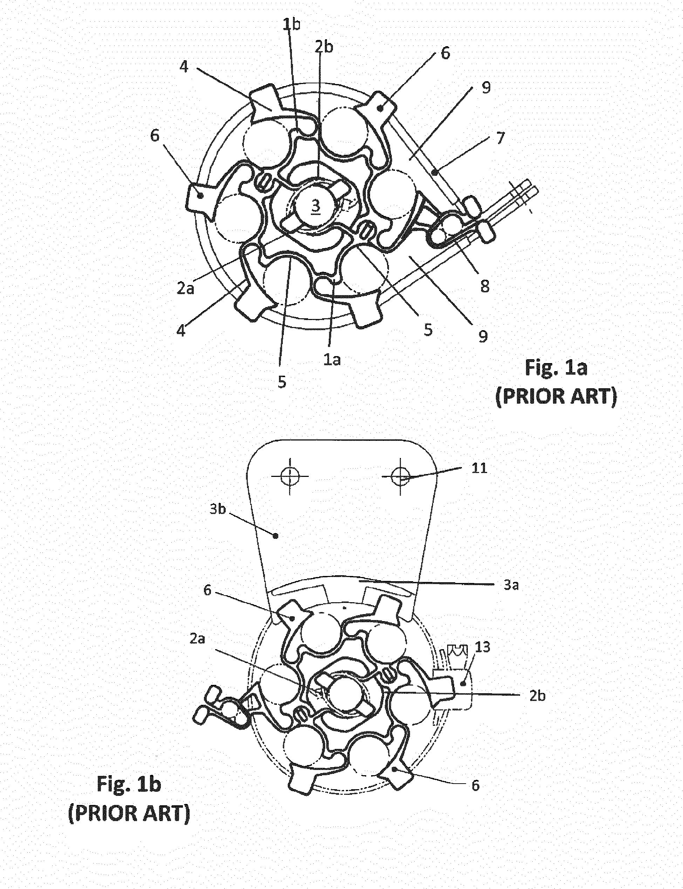

US 5,243,138 discloses a device for securing a plurality of electrical conductors in an aircraft. A known device, broadly corresponding to that shown in US 5,243,138, is illustrated by figs. 1a and 1b, and comprises two plastic sections 1a and 1b which snap together. Each section has at the centre (of the assembled device) a curved arm, the two curved arms 2a, 2b defining a space 3 in which a conductor can be gripped when the device is assembled. The sections 1a, 1b also each have three further curved arms 4 on their peripheral edges, which cooperate with recesses 5 in the outer periphery of the device to define six further conductor retaining spaces. All of the peripheral conductor spaces open-sided so that a conductor can be pushed laterally into the space. The peripheral arms each include a pair of tabs 6 extending radially outwards so as to define a circumferential channel around the device. In use, once the conductors have been inserted into the spaces, a band 7 (such as a jubilee clip, or, as in fig. 1, a P-clip) is secured around the device in the channel to hold the device and conductors together. This band can then be fastened to a suitable part of the aircraft structure.

The device of US '138 has several disadvantages and/or could be improved in various respects. It only has seven conductor spaces, so it is not well-suited for use with cables which have a neutral conductor in addition to the six phase conductors and the exciter cable. It is known to solve this problem by using the central space to hold the neutral conductor and to provide a separate auxiliary retainer 8 (see Figs 1a and 1b) which has a recess for the exciter cable and which is shaped so that it can rest on the circumferential edge of the device and be held in place by the band. Installing a cable using such an auxiliary retainer is particularly difficult, however, since the fitter must maintain the main device and auxiliary retainer in the correct position relative to each other whilst fitting a band around both. It has been found that using this system often results in damage to the device and/or the auxiliary retainer during installation.

Installation of the US '138 device can also be challenging for the fitter because the device has two separate parts. This means that the fitter must hold one half of the device in the correct position, push the conductors into place on that half of the device, and maintain them there whilst the other half of the device is connected and the rest of the conductors are pushed into place. It is easy during this process for the fitter to drop the second half of the device, or to be too forceful in pushing the conductors into place, either of which can damage the device. This risk is exacerbated by the fact that the conductors are usually very stiff, whereas certain parts of the device, such as the peripheral arms, are relatively thin and fragile.

It is often desirable to hang the cable from the aircraft structure using P-clips, rather than jubilee clips. The band of a P-clip defines a teardrop shape rather than a circle, meaning that if a P-clip is used to secure the device shown in Figs 1a and 1b there will be gaps 9 between the device and the clip at the point of the teardrop as shown in fig. 1a. It has been found that conductors can escape from the peripheral spaces into these gaps, leading to electromagnetic interference between the phases. Furthermore, the gaps 9 mean that the P-clip band does not fully engage with the circumferential channel on the device so in use the P-clip can become laterally dislodged from the device.

In other locations in an aircraft it may not be possible to use P-clips to attach a cable bundle to the aircraft structure because of space constraints. In some situations it is possible to use a saddle clamp in conjunction with a jubilee clip as is shown in fig. 1b. Known saddle clamps comprise a curved portion 3a arranged to engage with the curved edge of a prior art cable retaining device, from which extends radially a flat portion 3b. The flat portion has holes 11 through it to enable it to be screwed or bolted to the aircraft structure. The cable retaining device is held to the saddle clamp by a jubilee clip 13, which may be the same clip as is used to hold the cable retaining device together. As is clear from fig. 1b, prior art saddle clamps are configured for attachment to surfaces which are perpendicular to the longitudinal axis of the cable bundle, and this limits the situations in which they can readily be used. It also means that they are quite bulky, and that the cable bundle cannot be held closely against a surface which it runs parallel to by such saddle clamps.

The present invention seeks to mitigate one or more of the above-mentioned problems. Alternatively or additionally, the present invention seeks to provide an improved cable retainer for securing bundles of conductors.

### Summary of the Invention

The present invention provides, according to a first aspect, a device for securing a plurality of electrical conductors in a bundle. The device comprises first and second portions. The first and second portions are configurable between a closed configuration and an open configuration. The first and second portions are preferably arranged to be connected (or are already so connected/arranged) so as to be moveable between the closed configuration and the open configuration. The closed configuration is preferably one in which the first and second portions define at least one enclosed space (for example a central bore) which extends through the device. The open configuration is preferably one in which a conductor may be moved laterally into the at least one space (for example the central bore) from the periphery of the device. The device also has a plurality of recesses, for example outer recesses, for receiving conductors disposed around its peripheral edge. The first and second portions may be arranged so as to prevent movement of a conductor accommodated in the at least one space (for example, a central bore and/or an outer recess) defined when the device is in the closed configuration, laterally out therefrom.

Advantageously, the connection between the first and second portions enables devices according to the invention to be opened to allow access to the conductor space or spaces whilst remaining as a single object. This in turn enables a fitter to hold the device easily with one hand, leaving his/her other hand free to guide the conductors into the spaces and/or recesses. Preferably the device is arranged such that an operator can move it between the open and closed configurations using one hand. The device may be a device for securing a plurality of aircraft electrical conductors in a bundle.

A first part of the surface defining the central bore may be formed by the first portion of the device and a second part of the surface defining the central bore may be formed by the second portion of the device. The device may of course comprise a third and/or other portions. The device may alternatively be essentially in the form of a two part device (excluding any clamps, bands, fixings or the like for example).

The device may be substantially planar in its general form. For example, the device may be so shaped that, when in the closed configuration, it has a cross-sectional footprint having a minimum dimension in the plane of the device that is significantly greater than the thickness of the device (the dimension of the device transverse to the plane of the device). There may be one or more notional planes of the device.

The device may be arranged such that conductors secured by the device run transversely to the plane of the device. The at least one enclosed space may extend transversely through the plane (or the thickness) of the device. The device may have a transverse thickness which is less than half of its maximum dimension in the plane of the closed devise. Preferably the device has a transverse thickness which is less than a quarter of its maximum dimension in the plane of the closed device. The maximum transverse dimension of the device may be between 5mm and 40mm. Preferably the maximum transverse dimension of the device is between 10mm and 25mm. The maximum dimension in the plane of the closed device may be between 40mm and 100mm. Preferably the maximum dimension in the plane of the closed device is between 50mm 80mm. The weight of the device may be less than 25g. Preferably the weight of the device is less than 15g.

One or more of the plurality of recesses may comprise an arcuate surfaces. One or more of the plurality of recesses may be part-circular. Each of the plurality of recesses may comprise an arcuate surface and/or be part circular. Each of the arcuate surfaces may be substantially the same shape and size. Each of the plurality of recesses may be substantially the same distance from the centre of the enclosed space when the device is closed. The separations between a plurality of adjacent pairs of recesses may be substantially the same when the device is closed. The recesses may be spaced at equal angles around the peripheral edge of the device. Each of the plurality of recesses may be arranged to accommodate a conductor having a diameter of between 3mm and 15mm. Each of the plurality of recesses may be arranged to accommodate a conductor having a diameter of between 5mm a 12mm.

The at least one space may be arranged to accommodate a conductor having a diameter of between 3mm and 15mm when the device is closed. The at least one space may be arranged to accommodate a conductor having a diameter of between 5mm and 13mm when the device is closed. The area of the at least one space may be larger than the cross-sectional area of the largest conductor (with circular cross-section) which it is arranged to accommodate. For example, one or more retaining arms arranged to retain a conductor of a given cross-sectional area smaller than the area of the at least one space may extend into the at least one space. The at least one space (for example, all spaces for receiving conductors including a central bore and all peripheral recesses) may comprise a significant fraction of the overall footprint of the device. Advantageously, devices according to the invention in which the space comprises a significant fraction of the device are relatively lighter than devices in which the space is smaller, which is an important consideration for devices which are intended for use in aircraft.

The plurality of peripheral (outer) recesses may comprise six recesses arranged to accommodate six conductors circumferentially spaced, for example in hexagonal formation, about a central bore, when the device is in the closed configuration.

One or more of the plurality of peripheral recesses may be associated with a retaining arm extending across at least part of the recess so as to retain a conductor in the recess. Each of the plurality of peripheral recesses may be associated with such a retaining arm. The one or more retaining arms may be formed integrally with one of the first and/or second portions. The one or more retaining arms may be resilient. The one or more retaining arms may be arranged so as to be able to flex. The one or more retaining arms may form part of a peripheral edge of the device. The peripheral edge so formed may be curved. The one or more retaining arms may comprise one or more projections expending outwardly from the peripheral edge of the device. The one or more retaining arms may comprise a pair of such projections. The one or more retailing arms may comprise a plurality of such projections that together with an outer surface of the one or more arms define a channel. The channel may be arranged to receive the band of a clip, for example a P-clip or a jubilee clip. The projections may be arranged to minimise or prevent lateral movement of a clip being used on the device.

At least one of the first and second portions may be formed as a single piece. Preferably each of the first and second portions is formed as a single piece. The first and second portions may be pivotally connected. If the first and second portions pivotably connected, they may be arranged to pivot about an axis transverse to the plane of the device. The first and second portions may be connected by a hinge. The hinge feature may enable devices according to the invention to be opened and closed in a clam shell manner, i.e. with the first and/or second portions pivoting about an axis transverse to the plane of the device. Alternatively, the first and second portions may be arranged to pivot about an axis in the plane of the device. The first and second portions may be connected such that they can be moved between a closed configuration in which the first and second portions form an "O" shape and an open orientation in which they form an "S" shape, for example by means of the forementioned pivoting movement. The first and second portions may be slidably connected. The first and second portions may be arranged to slide relative to each other in a direction in the plane of the device. The first and second portions may be pivotally connected by means of a snap-fit connection. Thus, the first and second portions may be configured to be pivotally connected together, subsequently to be detached completely from each other, but then reattached. All of the spaces of the device for receiving conductors (for example including a central bore and all outer recesses) may be exclusively defined by the first portion, by the second portion or by parts of first and second portions.

The device may comprise a fastener for maintaining the device in the closed configuration. Devices having this feature advantageously are able to remain in the closed configuration without the operator needing to hold the device in that configuration. This allows the operator to use both hands to perform other tasks, such as adjusting the positioning of the conductors in the device, or fitting a clip around the outside of the device. The fastener may comprise a first formation on the first portion arranged to engage, for example by means of an interference fit, with a second corresponding formation on the second portion. One of the first and second formations may comprise a recess. The other of the first and second formations may comprise a projection, for example corresponding to such a recess.

The device may be arranged such that the first and second portions, when in the closed configuration, define at least one further enclosed space extending through the device for receiving a conductor, the at least one further space being disposed such that a conductor may be moved laterally into the at least one further space from the periphery of the device when the device is in the open configuration. In devices according to the invention, the spaces extending through the device are fully enclosed when such devices are in the closed configuration. Therefore, providing further such spaces advantageously means that a greater number of conductors can be located in the device such that there is no risk of them becoming dislodged and creating interference. The device may have two such further spaces. One or more of such further enclosed spaces may be disposed at or near the periphery of the device.

The at least one space may be disposed approximately centrally in the device. The at least one further space may be disposed toward the periphery of the device. The at least one space may be disposed relative to the recesses and/or the at least one further space so as to reduce the risk of interference between conductors received in the spaces and/or recesses when the device is in use. The at least one space may be larger than the at least one further space.

The peripheral edge of the device may include an angular region having two (preferably flat) surfaces which define a corner therebetween. In the case where the device has a first portion and a second portion, one of the two (preferably flat) surfaces may be defined by the first portion of the device and the other of the two surfaces may be defined by the second portion of the device. The two surfaces may meet at an angle in range 70° to 110°. Preferably the two surfaces meet at an angle in the range 80° to 100°. The peripheral edge of the device may include one or more surfaces which are arranged such that the peripheral edge of the device includes a curved region. The curved region may be formed partly by the first portion of the device and partly by the second portion. The curved region may be part-circular. The curved region may be approximately semi-circular. Advantageously, devices according to the invention which have such an angular region and such a curved region can be fitted into the loop of a P-clip with a good fit between the corresponding surfaces (for example, with no or only very small gaps between the peripheral edge of the device and the clip). This in turn significantly reduces the risk of conductors escaping from the recesses and becoming damaged or causing interference. The device may be roughly teardrop-shaped so as to facilitate use of a P-clip around its peripheral edge.

The device may include a slot arranged to bypass the angular region so as to define, in conjunction with the peripheral edge of the device excluding the angular region, a roughly circular path around the device. Advantageously, devices having this feature can be used with circular clips as well as with P-clips. The slot may be suitable for receiving the band of a jubilee clip.

The device may include at least one arm which extends into the at least one space to inhibit lateral movement of a conductor received within the space. The at least one arm may be curved, to facilitate engagement with a conductor. The device may include two such arms arranged such that in use of the device a conductor received within the space is held between the two arms. The at least one arm may be arranged so as to be able to flex. Advantageously, this feature allows devices according to the invention to receive conductors of a range of cross-sectional shapes and sizes within the at least one space. The at least one arm may be resilient. The device may include a formation arranged to limit the amount which the arm is able to flex. Advantageously, this feature of devices according to the invention prevents the arms flexing too much and becoming damaged or broken. The formation may be in the form of a stop. The at least one arm may be formed integrally with one of the first and/or second sections.

The present invention also provides, according to a second aspect, a method of securing together a bundle of conductors in an aircraft. Such a method may comprise the use of a device as described in relation to the first aspect. In such a case, the method may also comprise the steps of
providing a plurality of conductors extending between a first part of an aircraft and a second part of that aircraft,
arranging the device in the open configuration by moving the first portion relative to the second portion whilst the first and second portions remain connected together,
positioning a first one of the plurality of conductors between the first and second portions such that the conductor will be enclosed by the at least one space (for example the central bore) when the device is closed, and
moving the device into the closed configuration.

The step of arranging the device in the open position may be carried out by pivoting the first and second portions relative to each other. The step of moving the device into the closed configuration may be carried out by pivoting the first and second portions relative to each other. The method may further comprise the step of pushing a further one of the plurality of conductors into one of the plurality of recesses. This step may be repeated until all of the plurality of conductors are received within either the at least one space or the plurality of recesses, with one conductor per space/recess. The method may additionally comprise the steps of providing a band and fastening the band around the peripheral edge of the device. This step may be carried out once all of the conductors are received within either the at least one space or the plurality of recesses. The band may comprise a P-clip. Alternatively, the band may comprise a jubilee clip.

The method may include the steps of providing one or more further devices as described above. The one or more further devices may be used to secure together the bundle of conductors at a different point or points along the length of the conductors to where the first device is used. The method may include the step of attaching the device to a surface in an aircraft, for example via a band as mentioned above.

The present invention also provides, according to a third aspect, a device for securing a plurality of electrical conductors in a bundle, wherein the device has first and second portions and at least two spaces for conductors each being formed by both the first and second portions. Such a device may comprise first and second portions which are movable relative to each other into a closed configuration in which the first and second portions define a central bore which is preferably wholly enclosed in the plane of the device by the device and which extends through a central region of the device for receiving a conductor. The first and second portions may also be movable relative to each other into a closed configuration in which the first and second portions define a peripheral bore which is preferably wholly enclosed in the plane of the device by the device and which extends through a peripheral region of the device for receiving a conductor. The first and second portions may be arranged such that a first part of the surface defining the central bore is formed by the first portion and a second part of the surface defining the central bore is formed by the second portion. The first and second portions may be arranged such that a first part of the surface defining the peripheral bore is formed by the first portion and a second part of surface defining the peripheral bore is formed by the second portion. The device may further have a plurality of recesses for receiving conductors disposed around its peripheral edge.

Advantageously, conductors substantially prevented from escaping from the enclosed bores of devices according to the fourth aspect of the invention when such devices are in the closed configuration, even if significant forces (of the magnitude that might be sustained during use) are exerted on the conductors and/or the devices.

The first and second portions may be arranged to move to an open configuration, in which a conductor may be moved laterally into either of the central and peripheral bores. This feature of devices according the fourth aspect of the invention allows conductors to easily be inserted into the bores since it is not necessary to poke them through the bores lengthways.

The device may be arranged such that the first and second portions, when in the closed configuration, define at least one further peripheral bore which is wholly enclosed by the device and which extends through a peripheral region of the device for receiving a conductor, wherein a first part of the surface defining the further peripheral bore is formed by the first portion and a second part of the surface defining the further peripheral bore is formed by the second potion. The further peripheral bore may be smaller than the first peripheral bore. The further peripheral bore may be arranged to receive an exciter cable. The first peripheral bore may be arranged to receive a phase conductor. The peripheral bore and/or the further peripheral bore may be arranged to accommodate a conductor with a non-circular cross section. The central bore may be larger than the peripheral bore or bores.

One of the first and second parts of the surface defining the peripheral bore may be flat. The other of the first and second parts of the surface defining the peripheral bore may be in the form of a recess. The recess may be curved. One of the first and second parts of the surface defining the further peripheral bore may be flat. The other of the first and second parts of the surface defining the further peripheral bore may be in the form of a recess.

The invention also provides, according to a fourth aspect, a method of securing together a bundle of conductors in an aircraft comprising the steps of
providing a plurality of conductors which extend between a first part of an aircraft and a second part of that aircraft,
providing a device as described above in relation to the third aspect of the invention,
inserting a first one of the plurality of conductors into the central bore such that the first conductor is circumferentially enclosed by the device, and
inserting a second one of the plurality of conductors into the peripheral bore such that the second conductor is circumferentially enclosed by the device.

The step of inserting a first one of the plurality of conductors may comprise the steps of
arranging the device in an open configuration in which the first and second portions are relatively spaced apart from each other as compared with the closed configuration,
and moving the first one of the plurality of conductors laterally into the central bore.

The first conductor may be a neutral conductor. Alternatively, the first conductor may be a phase conductor. The first conductor may be an exciter cable. The second conductor may be a phase conductor. The second conductor may be an exciter cable.

The step of inserting a second one of the plurality of conductors may comprise the steps of
arranging the device in an open configuration in which the first and second portions are relatively spaced apart from each other as compared with the closed configuration,
and moving the second one of the plurality of conductors laterally into the peripheral bore.

The method may include the step of moving the device into the closed configuration. The method may include the step of inserting a third, one of the plurality of conductors into a further peripheral bore such that the third conductor is circumferentially enclosed by the device. The method may further comprise the step of pushing a further one of the plurality of conductors into one of the plurality of recesses. This step may be repeated until each of the plurality of conductors are received within either the central bore, the peripheral bore, the further peripheral bore (if present) or a recess.

The invention also provides, according to a fifth aspect, a device for securing a plurality of electrical conductors in a bundle, the device comprising a body portion haying a plurality of spaces for receiving elongate conductors, wherein the peripheral edge of the body portion includes two surfaces which define a corner therebetween such that the device is shaped to engage with a P-clip. The two surfaces may define an extended region of the body portion which is radially further from the centre of the body portion than all other regions of the body portion. The extended region may comprise at least one bore in which a conductor may be received.

The invention also provides, according to a sixth aspect, a device as described above in relation to the fifth aspect in use with a P-clip, wherein the device and the conductors secured by the device fill substantially all of the space within the loop of the P-clip, such that any peripheral spaces between the P-clip loop and the peripheral edge of the device are smaller than the peripheral recesses. In some embodiments the device itself may define free space, but in such contexts it will be understood that the device still fills substantially all of the space within the P-clip loop. The P-clip loop may be in contact with substantially all of the two surfaces. The P-clip may be fastened to a surface in an aircraft.

The invention also provides, according to a seventh aspect, a device for securing a plurality of electrical conductors in a bundle, the device comprising a body portion having at least one space through the body portion for receiving an elongate conductor, and at least one arm which extends into the space to inhibit radial movement of a conductor received within the space, the at least one arm being arranged so as to be able to flex relative to the body portion, and wherein the device includes a formation arranged to limit the amount of this flexion.

The formation may comprise a projection extending inwardly from the inner surface of the at least one space. Alternatively, the formation may comprise a projection extending outwardly from the outer surface of the at least one arm. The formation may comprise a ridge. The formation may comprise a stop. The formation may comprise a boss. The formation may be formed integrally with the at least one arm. The formation may be formed integrally with the body portion.

The present invention also provides, according to an eighth aspect, an aircraft comprising a bundle of electrical conductors secured by at least one device as described in relation to any of the first, third, fifth, sixth and seventh aspects.

The invention also provides, according to a ninth aspect, a clamp for attaching a bundle of conductors held together by a cable retaining device to a surface. The clamp may be provided as part of a kit of parts. Such a kit may also include a device of the present invention, as described or claimed herein, for securing a plurality of electrical conductors in a bundle. The clamp preferably comprises a first portion adapted to engage with (preferably removably engage with) a cable retaining device. The first portion may have a generally arcuate surface adapted to engage with such a device. The first portion is connected to (including being integrally formed therewith) a second portion which is adapted to be attached to a (preferably flat) surface, for example of an aircraft structure. The second portion may have a generally planar surface for this purpose. The clamp is advantageously arranged such that in use the longitudinal axis of a bundle of conductors held by the cable retaining device is parallel to the surface to which the clamp is attached. The surface may be a surface in an aircraft. Advantageously, the feature of the clamps according to the invention of being arranged to attach to a surface parallel to the longitudinal axis of the bundle of conductors being clamped allows for the clamps to be significantly smaller than prior art clamps. Also the bundle can advantageously be held very close to the surface to which it is being attached, allowing bundles to be routed through smaller spaces than would otherwise be possible.

The clamp may be a saddle clamp. The first portion may be arranged to engage with a substantially planar cable retaining device. The first portion may be arranged to engage with a cable retaining device having a peripheral edge which comprises a curved surface. The first portion may be arranged to engage with a cable retaining device as described herein in relation to any of the first, third, fifth, sixth and seventh aspects of the invention. The first portion may comprise at least one curved surface. The first portion may comprise an inner curved surface and an outer curved surface radially spaced from the inner curved surface. The first portion may be substantially arcuate. The clamp may be arranged such that in use a curved surface on the first portion abuts a curved surface on the cable retaining device. The clamp may be so arranged that, in use, the central longitudinal axis is centrally spaced apart from the extreme lateral edges defined by the arcuate surface of the first portion, preferably such that the angle subtended, within the plane of the device, by the extreme lateral edges defined by the arcuate surface and having a vertex at the central longitudinal axis is at least 30 degrees, and preferably more than 45 degrees and possibly more than 60 degrees. Thus, the extent of the clamp along the surface may be relatively great thus providing a reliable and strong means for clamping the bundle of conductors relative to the surface.

The first portion may comprise at least one recess arranged to receive a projection disposed on the peripheral edge of a cable retaining device. This engagement between the recess and the projection helps to ensure that movement between a clamp according to the invention and a device it is clamped thereto is minimised. The at least one recess may extend radially from the at least one curved surface. The first portion may comprise two recesses arranged to receive a projection disposed on the peripheral edge of a cable retaining device. Preferably the first portion includes four such recesses. The at least one recess may be larger than the projection it is arranged to receive. This feature of clamps according to the invention makes it easy to fit a retaining device to a clamp.

The second portion may comprise a flat surface. The clamp may be arranged such that in use the flat surface on the second portion abuts the surface to which the clamp is attached. The flat surface on the second portion may form an opposite face of the clamp to the curved surface on the first portion. The second portion may be substantially planar. The second portion may extend tangentially to the at least one curved surface on the first portion.

There may be one or more holes extending through the second portion. The one or more holes may be arranged to receive the shaft of a bolt. There may be one or more holes expending through the first portion. The holes extending through the first portion may be larger than the holes extending through the second portion. The holes extending through the first portion may be aligned with the holes extending through the second portion. The holes extending through the first portion may be arranged to allow access to the holes extending through the second portion, for example to permit a screwdriver to be applied to the head of a screw received by one of the holes passing through the second portion.

The clamp may include a passage between the first and second portions for receiving the band of a jubilee clip. The passage may be at least partly defined by a curved surface of the first portion. This feature of clamps according to the invention allows the clamp to be held to a cable retaining device by a jubilee or other similar clip, which may be the same clip which holds the retaining device together.

The invention also provides, according to a tenth aspect, a surface in an aircraft having a bundle of conductors attached to it using a clamp as described in relation to the ninth aspect.

The invention also provides, according to an eleventh aspect, a method of attaching a bundle of conductors held together by a cable retaining device to a surface in an aircraft comprising the steps of

providing a bundle of conductors extending between a first part of an aircraft and a second part of that aircraft which is held together by a cable retaining device,
providing a clamp arranged to engage with the cable retaining device,
securing the clamp to a surface in the aircraft, and
securing the clamp to the device such that the longitudinal axis of the bundle of conductors is parallel to the surface.

The invention further provides a device for securing a plurality of electrical conductors in a bundle,
the device comprising first and second portions which are configurable into a closed configuration in which the first and second portions abut each other to define (i) a central bore which is wholly enclosed in the plane of the device by the device and which extends through a central region of the device for receiving a conductor and (ii) a peripheral bore which is wholly enclosed in the plane of the device by the device and which extends through a peripheral region of the device for receiving a conductor, the first portion being disposed generally to a first side of the central bore and the peripheral bore and the second portion being disposed generally to an second opposite side of the central bore and the peripheral bore,
the first and second portions being arranged such that a first part of the surface defining the central bore and a first part of the surface defining the peripheral bore is formed by the first portion and a second part of the surface defining the central bore and a second part of the surface defining the peripheral bore is formed by the second portion,
the device further having a plurality of recesses for receiving conductors disposed around its peripheral edge.

The invention yet further provides a device for securing a plurality of electrical conductors in a bundle, the device comprising a body portion having a plurality of spaces for receiving elongate conductors, wherein the peripheral edge of the body portion includes one or more curved regions and two flat surfaces which, at least when the device is configured to secure the plurality of electrical conductors in a bundle, meet at an angle such that the device is shaped to engage with a P-clip.

The invention yet further provides a device for securing a plurality of electrical conductors in a bundle, the device comprising a body portion having at least one space through the body portion for receiving an elongate conductor, and at least one arm which extends into the space to inhibit radial movement of a conductor received within the space, the at least one arm being arranged so as to be able to flex relative to the body portion, and wherein the device includes a formation arranged to stop the arm from being flexed beyond a limit at which the flexion would cause damage to the arm.

The invention yet further provides a clamp for attaching a bundle of conductors held together by a cable retaining device to a surface, the clamp comprising a first portion having a generally arcuate surface adapted to engage with a removable cable retaining device, the first portion being connected to a second portion having a generally planar surface which is adapted to be attached to a flat surface, wherein the clamp is arranged such that in use the central longitudinal axis of a bundle of conductors held by the cable retaining device is parallel to the generally planar surface and arranged centrally spaced apart from the extreme lateral edges defined by the arcuate surface such that the angle subtended, within the plane of the device, by the extreme lateral edges defined by the arcuate surface and having a vertex at the central longitudinal axis is at least 30 degrees.

It will of course be appreciated that the various aspects of the invention as described herein are closely related and that therefore essential or preferred features of one aspect of the invention may be incorporated into other aspects of the invention as described herein. For example, a clamp according to the ninth aspect of the invention may be used to attach a device according to any of the first, third, fifth, sixth and seventh aspects to an aircraft according to the eighth aspect. A device according to any aspect of the invention may be so configured as to be suitable for used in a method according to the same, or any other, aspect of the invention. Also, any aspect of a method of the invention may use, or be performed on, a device according to the same, or any other, aspect of the invention. Features of the device of the invention may be incorporated into the method of the invention and *vice versa.*

### Description of the Drawings

Embodiments of the present invention will now be described by way of example only with reference to the accompanying schematic drawings of which:
- Figure 1a: shows a side view of a prior art cable retaining device in use;
- Figure 1b: shows a side view of a prior art cable retaining device and a prior art saddle clamp in use;
- Figure 2: shows a perspective view of a cable retaining device according to an example embodiment of the invention;
- Figure 3: shows a side view of the device of figure 2;
- Figure 4: shows a side view of the device of figure 2 in use with a P-clip;
- Figure 5a: shows a perspective view of a saddle clamp according to an example embodiment of the invention;
- Figure 5b: shows a side view of the clamp of figure 5a;
- Figure 5c: shows an end view of the clamp of figure 5a; and
- Figure 6: shows a side view of the device of figure 2 and the clamp of figure 5a.

### Detailed Description

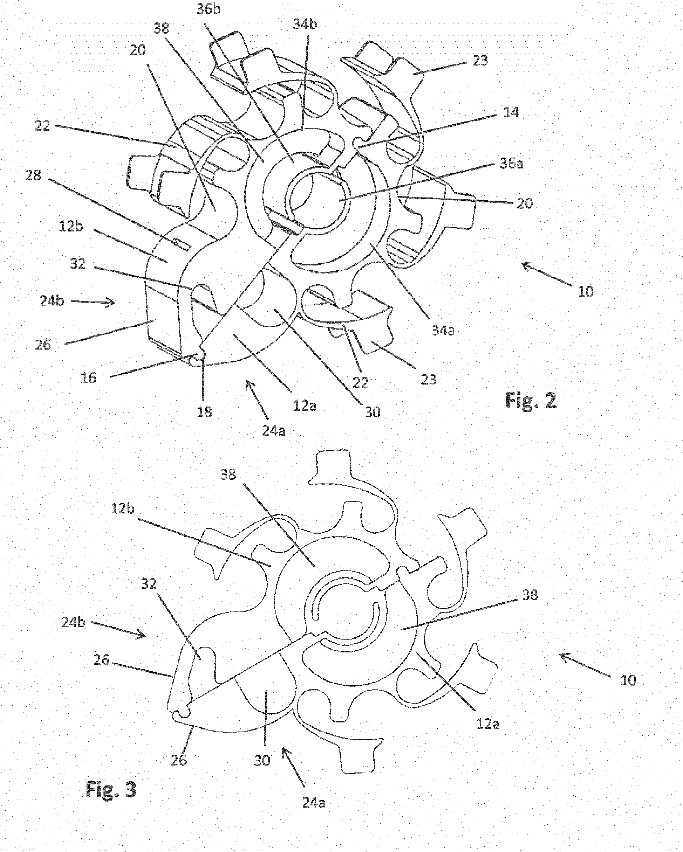

Figures 2 and 3 show a cable retaining device 10 according to an example embodiment of the invention. The device 10 comprises two sections 12a and 12b moulded from a plastics material such as polyetherimide. If resistance to very high temperatures is required then the plastics material can be reinforced with glass fibres. The overall thickness of the device is 20mm. When in the closed configuration shown in figures 2 and 3 the device has a maximum dimension in the plane of 60mm.

Sections 12a and 12b are connected by a hinge 14. Hinge 14 consists of two pins formed integrally with section 12a, which locate with either end of a cylindrical bore in section 12b, such that the sections may pivot relative to each other about the pins between an open configuration (not shown) and the closed configuration shown in figures 2 and 3. Section 12b includes a projection 16 at the opposite end of the device to hinge 14, which snap-fits into a corresponding recess 18 on section 12a to hold the device in the closed configuration.

Section 12a has three recesses 20 arranged around the peripheral edge that forms the outer surface of the device 10. Each recess is arranged to hold a circular cross-section conductor having a diameter of up to 9.9mm (the diameter of a typical phase conductor). Each recess 20 has an associated retaining arm 22 extending across the open side of the recess. A recess 20 and its retaining arm 22 together form a substantially enclosed space with only a small gap being present between the inner surface of the retaining arm 22 and the lip of the recess 20. Section 12b has two such recesses 20 and associated arms 22.

The retaining arms 22 are formed integrally with the sections 12a, 12b and are slender enough at the points where they meet the recesses 20 to be able to flex by a significant amount. This flexibility allows the arms 22 to be deflected away from the device 10 such that conductors can be inserted radially into the recesses 20. The arms 22 are resilient and spring back to their original position once the conductors have been inserted, and so act to retain the conductors in the recesses 20. Each arm 22 has two tabs 23 projecting radially from its outer surface. The tabs 23 are formed integrally with the arms 22 and serve to prevent lateral movement of a band wrapped around the peripheral edge of the device 10 (for example the band of a P-clip or a jubilee clip).

Each section 12a, 12b has an extended portion 24a, 24b at an end opposite the ends which are connected by hinge 14. Each of the extended portions 24a, 24b has a flat outer surface 26. These flat surfaces meet at right angles when the device 10 is closed. A rectangular cross-section slot 28 passes through each of the extended portions 24a, 24b close to where they join the rest of sections 12a, 12b. The slot 28 allows a circular band (such as that belonging to a jubilee clip) to be wrapped around the device 10 when it is closed. The band passes through the slot 28 and so does not go around the extended portions 24a, 24b.

Extended portion 24a includes a U-shaped space 30 extending from one face of the device 10 to the other. This space 30 is open-sided when the device is open, allowing a conductor to be inserted into it. When the device 10 is closed the space 30 is closed off by the edge of section 12b, retaining the conductor within it. Space 30 is large enough to hold a circular cross-section conductor of the same diameter as the conductors received by the recesses 20. Space 30 is located toward the inner end of extended portion 24a, so that slot 28 passes to the outside of it.

Extended portion 24b includes an approximately U-shaped space 32 extending from one face to the other. This space 32 is open-sided when the device is open and is closed off by the edge of section 12a when the device is closed. Space 32 is smaller than space 30, and is arranged to hold an exciter cable. Space 32 is located towards the outer end of extended portion 24b, so that it is outside of slot 28.

Towards the centre of each section 12a, 12b there is a semi-circular cut-away portion 34a, 34b. A curved arm 36a, 36b extends into each of the cut-away portions. When the device 10 is closed the two curved arms 36a, 36b define between them a cylindrical space 11.5m in diameter, which is equal to the diameter of a typical neutral conductor. Smaller diameter cables may also be held by this central space, although clearly they will not be gripped as firmly by the arms 36a, 36b. When the device 10 is opened the arms 36a, 36b move apart so that a conductor can be inserted radially between the arms.

The arms 36a, 36b are formed integrally with the sections 12a, 12b. The arms are slender enough to be able to flex slightly in the plane of the device, however excessive deflection of either arm toward the wall of its associated cut-away section could break that arm. To prevent such excessive deflection, a thin ridge 38 extends from the inner surface of each cut-away portion 34a, 34b. Each ridge stops a short distance away from the outer surface of the associated arm 36a, 36b so as to limit the degree of deflection possible by that arm whilst not adding significantly to the weight of the device 10.

In use, the device 10 holds up to seven conductors plus an exciter cable together in a bundle. To apply the device to a group of conductors consisting of six phase conductors and a neutral conductor, a fitter holds the device in the open configuration with one hand and pushes the neutral conductor between the two sections 12a, 12b and into the central space between the arms 36a, 36b. The device may then be closed enough that the neutral cable is held in place whilst still allowing access to spaces 30 and 32. A phase conductor is pushed into space 30, and the exciter cable is pushed into space 32. The device 10 is then closed by squeezing the sections 12a and 12b together so that the projection 16 snaps into recess 18 to hold the device in the closed configuration.

The device 10 will now support itself on the conductors which are already held within it, so the fitter may use both hands to ease the remaining phase conductors into the five recesses 20. Once the recesses 20 have been filled, the arms 22 hold the phase conductors in place well enough to allow the fitter to use both hands to position the band of a retaining clip around the peripheral edge of the device, between the tabs 23 and then tighten it to hold all of the outer phase conductor securely in place.

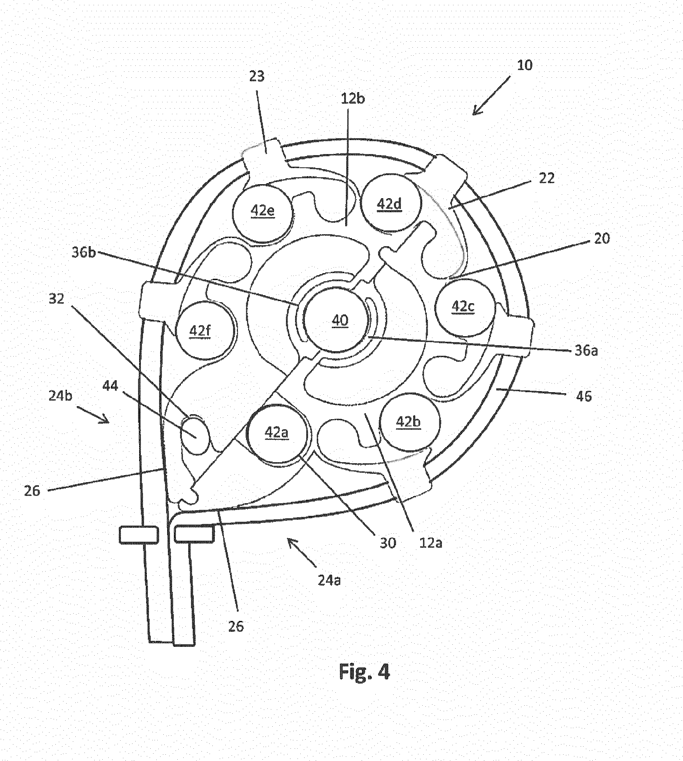

Figure 4 shows a device 10 holding a neutral conductor 40, six phase conductors 42a-f, and an exciter cable 44. A P-clip 46 has been applied around the peripheral edge of the device. It can be seen that the extended portions 24a, 24b fill the pointed region of the P-clip loop, and the flat surfaces 26 ensure that there are no gaps between the P-clip band and the peripheral edge of the device into which the phase conductor 42f could escape.

Once a P-clip has been secured around the device 10, the P-clip is used to hang the bundle from a part of the aircraft structure by passing a bolt through the ends of the P-clip band. Further devices 10 can then be applied at other points along the bundle as appropriate.

In some locations within an aircraft it is not possible to hang the bundle from the structure using P-clips, for example because of space constraints. In these locations a jubilee clip is used to hold the device and conductors securely together, and a saddle clamp is used to attach the device to the aircraft structure.

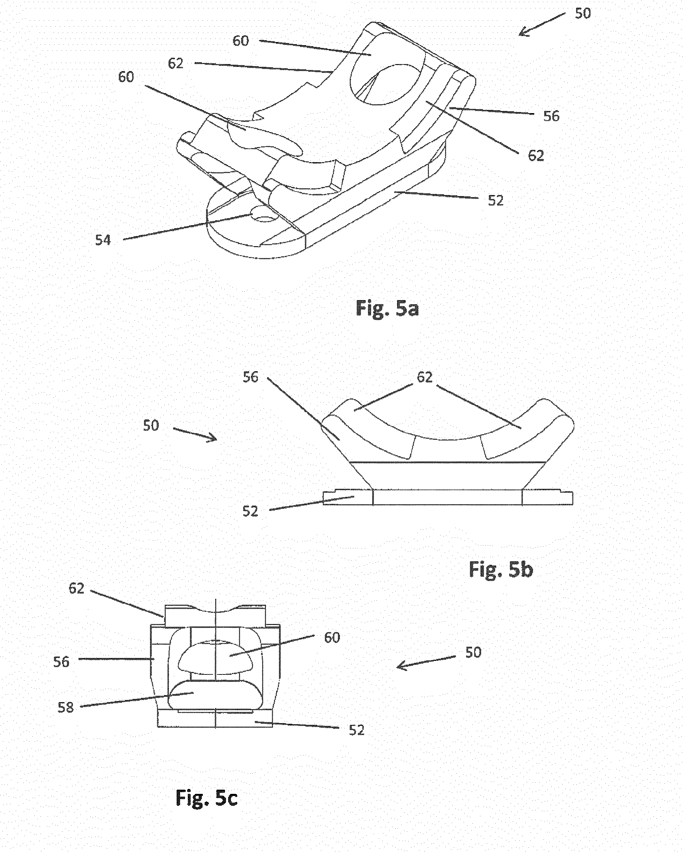

Figures 5a-c show a saddle clamp 50 according to the first example embodiment of the invention. The clamp 50 is moulded from a plastics material such as polyetheretherketone (PEEK) reinforced with glass fibres. It has a flat base portion 52 with a circular hole 54 at either end (only one hole is visible in figure 5a) through which a bolt or screw can be inserted to fix the clamp to a surface. Above the base portion 52 and formed integrally with it there is an arcuate saddle portion 56. The flat base portion 52 extends tangentially from the arcuate saddle portion 56.

The lower surface of the saddle portion 56 has downwardly extending ridges which define a passage 58 between the lower surface of the saddle portion 56 and the upper surface of the base portion 52, as can be seen from figure 5c. The passage 58 allows a band, such as that of a jubilee clip, to pass through the clamp 50 so that it can be secured to a cable retaining device 10. The saddle portion 56 also has two holes 60 passing through it. The holes 60 allow a screwdriver or similar tool to manipulate the screws or bolts in holes 54 before the clamp is attached to a device 10.

The upper surface of the saddle portion 56 has two recessed portions 62 on each of its long edges. These recessed portions receive the tabs 23 of a device 10. Thus, the width of the saddle portion 56 between the recessed portions 62 is approximately equal to the distance between a pair of tabs 23 on device 10.

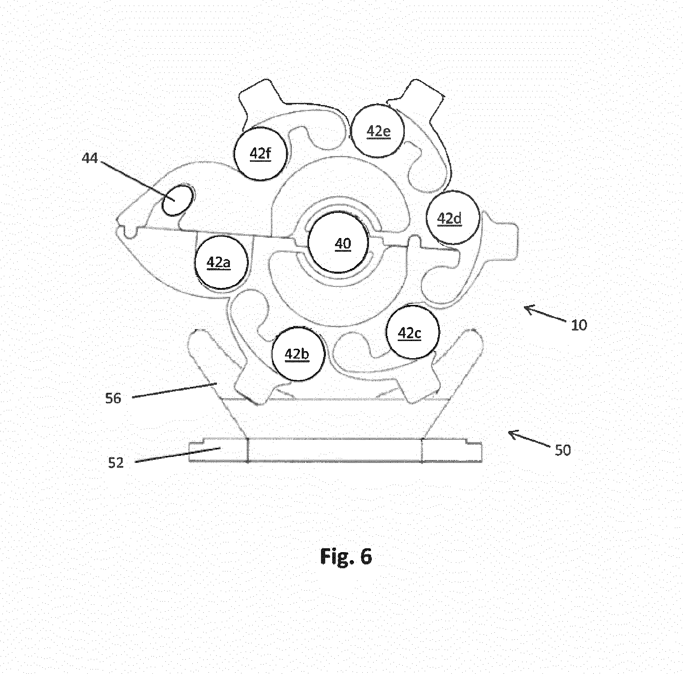

A saddle clamp 50 is used to secure a cable retaining device 10 to the structure of an aircraft where space is limited and the cable bundle must be held close to the structure. As can be seen from figure 6, the low profile of the saddle clamp 50 means that the cable bundle is held just a few millimetres away from the surface to which the clamp is attached.

To attach a cable bundle to a surface of an aircraft structure using a saddle clamp 50, firstly the clamp 50 is fixed to the surface using bolts through holes 54. A device 10 is then applied to the cable bundle as described above, in a position such that two pairs of the tabs 23 can engage with the cut-away portions 62 when the device 10 and the clamp 50 are held together with the peripheral surface of the device against the upper surface of the saddle portion 56. Once the device 10 has been so applied, it is held in position against the saddle clamp 50 and a jubilee clip 64 is fitted around the device/clamp combination as shown in figure 6. The band of the clip 64 passes through the passage 58 in the saddle clamp 50, and through the slot 28 in the device 10. The jubilee clip 64 thus holds the cables in position with respect to the device, and the whole bundle in place on the clamp 50.

It will be seen that the clamp 50 is arranged such that in use the central longitudinal axis of the cable bundle is parallel to the flat surface to which it is fixed. The axis of the cable bundle is centrally disposed between and above the extreme lateral edges defined by the upper surface of the arcuate saddle portion 56. The angle, having as its vertex the central axis of the cable bundle, subtended by those extreme latter edges is greater than 45 degrees in Figure 6.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

A dedicated hinge may be provided for allowing the movement of the first section relative to the second section. For example, in the embodiment shown in Figures 2 and 3, hinge 14 could be replaced with a snap-fit projection that operates in much the same way as projection 16, and a separate hinge mechanism could instead be provided between part 14 and the extreme periphery of the device.

The number of peripheral recesses 20 provided on the device 10 need not be five. For example, there could be six peripheral recesses. In this case space 30 need not be present. The size of the recesses and/or conductor spaces could be different from that set out above. The size of the device may be adjusted according to how many conductor spaces and/or recesses it has, and/or the diameter of the conductors it is intended to retain. The flat surfaces 26 need not be exactly flat, but could instead be slightly convex or concave. The location of the projection 16 and corresponding recess 18 could be different to that shown in the figures. A closure mechanism other than projection 16 and recess 18 could be used, for example an elastic band could be attached to one of the sections 12a, 12b, for engagement with a formation such as a hook on the other of the sections 12a, 12b.

The base of the saddle clamp may have more or fewer than two holes 54. The number of recessed portions 62 may be more or fewer than four.

Where in the foregoing description, integers or elements are mentioned which have know, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims_{.} Moreover, it is to be understood that such optional integers or features, whilst of possible benefit in some embodiments of the invention, may not be desirable, and may therefore be absent, in other embodiments.

## Claims

1. A device for securing a plurality of electrical conductors in a bundle, wherein
the device comprises first and second portions connected so as to be moveable, when so connected, between (i) a closed configuration of the device in which the device defines a central bore which extends through the device, a first part of the surface defining the central bore being formed by the first portion and a second part of the surface defining the central bore being formed by the second portion and (ii) an open configuration of the device in which a conductor may be moved laterally into the central bore from the periphery of the device, and
the device defines a plurality of outer recesses for receiving conductors disposed around its peripheral edge.

2. A device according to claim 1, wherein the first and second portions are connected to rotate about a hinge axis which is substantially parallel to the axis of the central bore.

3. A device according to claim 2, wherein the device comprises a fastener for maintaining the device in the closed configuration, the fastener comprising a first formation on the first portion arranged to engage with a second corresponding formation on the second portion.

4. A device according to any preceding claim, wherein the first and second portions are arranged for preventing movement of a conductor accommodated in the central bore, defined when the device is in the closed configuration, laterally out of the bore.

5. A device according to any preceding claim,
wherein at least one of the plurality of outer recesses is defined, when the device is in the closed configuration, partly by the first portion and partly by the second portion, such that a conductor may be moved laterally into said at least one of the plurality of outer recesses from the periphery of the device when the device is in the open configuration and
wherein the first and second portions are arranged for preventing movement of a conductor accommodated in said at least one of the plurality of outer recesses defined when the device is in the closed configuration, laterally out of the outer recess.

6. A device according to any preceding claim, wherein the device, when in the closed configuration, has a peripheral edge which includes (i) an angular region having two flat surfaces which define a corner therebetween and (ii) a curved region.

7. A device according to claim 6, wherein
the device has one or more main body portions which define the peripheral edge,
the two flat surfaces define an extended region of the one or more main body portions which is radially further from the centre of the one or more main body portions than all other regions of the one or more main body portions, and
the angular region and the curved region are adapted to engage a P-clip.

8. A device according to claim 6 or claim 7, wherein one of the two flat surfaces is defined by the first portion of the device and the other of the two flat surfaces is defined by the second portion of the device.

9. A device according to any of claims 6 to 7, wherein the device includes a slot arranged to bypass the angular region so as to define, in conjunction with the peripheral edge of the device excluding the angular region, a roughly circular path around the device, the slot being suitable for receiving the band of a jubilee clip.

10. A device according to any preceding claim, wherein the device includes
at least one arm which extends into the central bore to inhibit lateral movement of a conductor received within the central bore, the at least one arm being arranged so as to be able to flex, and
a formation arranged to limit the amount which the arm is able to flex.

11. A kit of parts including a device according to any preceding claim, and a clamp for attaching a bundle of conductors held together by the device to a flat surface, wherein
the clamp comprises a first portion adapted to engage with the device to hold the device securely in place,
the clamp comprises a a second portion being connected to the first portion, the second portion being adapted to be attached to the flat surface, and
the clamp is arranged such that in use the longitudinal axis of a bundle of conductors held by the device is parallel to the surface.

12. A kit of parts according to claim 11, wherein the first portion of the clamp comprises at least one recess arranged to receive a projection disposed on the peripheral edge of a cable retaining device.

13. A kit of parts according to claim 11 or 12, wherein the clamp includes a passage between the first and second portions for receiving a band of a jubilee clip.

14. A method of securing together a bundle of conductors in an aircraft comprising the steps of
providing a plurality of conductors extending between a first part of an aircraft and a second part of that aircraft,
providing a device according to any of claims 1 to 13, arranging the device in the open configuration by moving the first portion relative to the second portion whilst the first and second portions remain connected together,
positioning a first one of the plurality of conductors between the first and second portions such that the conductor will be enclosed by the central bore when the device is closed,
moving the device into the closed configuration, and
receiving one or more of the other conductors of the bundle into each of said plurality of outer recesses of the device.

15. A method according to claim 14, wherein the method also includes the following steps:
providing a clamp for attaching the bundle of conductors held together by the device to a flat surface,
attaching the clamp to the device to hold the device securely in place relative to the clamp,
attaching a flat surface of the clamp to an aircraft structure, such that the longitudinal axis of the bundle is parallel to the flat surface of the clamp.
